**Europäisches Patentamt**

**European Patent Office**

**Office européen des brevets**

(19)

(11) Veröffentlichungsnummer: **0 322 364 B1**

# (12) EUROPÄISCHE PATENTSCHRIFT

(45) Veröffentlichungstag der Patentschrift:
**24.04.91 Patentblatt 91/17**

(51) Int. Cl.$^5$: **B32B 27/08, B65D 65/40**

(21) Anmeldenummer: **88810873.5**

(22) Anmeldetag: **19.12.88**

(54) **Mehrschichtige Kunststoffolie.**

(30) Priorität: **23.12.87 CH 5047/87**

(43) Veröffentlichungstag der Anmeldung:
**28.06.89 Patentblatt 89/26**

(45) Bekanntmachung des Hinweises auf die
Patenterteilung:
**24.04.91 Patentblatt 91/17**

(84) Benannte Vertragsstaaten:
**AT BE CH DE FR GB IT LI NL SE**

(56) Entgegenhaltungen:
**EP-A- 0 056 323**
**FR-A- 2 228 610**
**GB-A- 953 663**
**US-A- 4 423 185**

(73) Patentinhaber: **ALMA SA**
**CH-1783 Pensier/FR (CH)**

(72) Erfinder: **Peter, Mario**
**Chemin du Port 9**
**CH-1786 Sugiez/FR (CH)**
Erfinder: **Grämiger, Erich**
**Quellenstrasse 9**
**CH-3065 Bolligen/BE (CH)**

(74) Vertreter: **Schweizer, Hans et al**
**Bovard AG Patentanwälte VSP**
**Optingenstrasse 16**
**CH-3000 Bern 25 (CH)**

**Beschreibung**

Die vorliegende Erfindung bezieht sich auf eine mehrschichtige Kunststoffolie gemäss den Oberbegriffen der Patentansprüche 1 und 4, auf ein Verfahren zur Herstellung der Kunststoffolie und auf deren Verwendung zur Herstellung von glasklaren Verpackungsbehältern.

Verpackungsbehälter aus Kunststoff, insbesondere für die Lebensmittelindustrie, werden vorwiegend durch Warmverformung aus Kunststoffolien hergestellt. Bis heute sind dazu vorwiegend Polyvinylchlorid-Folien verwendet worden. Da sich beim Verbrennen von Polyvinylchlorid-Folien in den Abgasen Salzsäure bildet, musste aus Umweltschutzgründen nach anderen Ausgangsmaterialien für die genannten Verpackungsbehälter Ausschau gehalten werden.

Geeignete Kunststoffe zum Verpacken und Aufbewahren von Lebensmitteln müssen ganz bestimmte Eigenschaften aufweisen. Sie dürfen keinen Eigengeschmack haben, sollten eine hohe Wasserdampfdichte, wenn möglich eine Gassperrschicht und/oder gewisse andere Barriereneigenschaften, insbesondere für Fette aufweisen. Als günstig inbezug auf die genannten Eigenschaften hat sich dabei die Verwendung von Polypropylen erwiesen.

Leider ist es bis heute nicht möglich, mit dem bekannten Extrusionsverfahren Polypropylenfolien herzustellen, die ein glasklares Aussehen haben. Solche Folien wirken milchig, schmutzig und unansehnlich. Durch die nachfolgende Weiterverarbeitung durch Warmverformung zu Verpackungsbehältern wird dieses Aussehen beibehalten. Der unappetitliche Eindruck, den solche Behälter ausstrahlen, hat eine verkaufshemmende Wirkung auf das darin verpackte Produkt.

Polypropylenfolien, insbesondere für den genannten Verwendungszweck, haben den weiteren Nachteil, dass ihre Oberfläche nicht ohne entsprechende Vorbehandlung bedruckbar ist. Zum Bedrucken der Oberfläche muss diese zuerst durch Beflammung oder Coronabehandlung anoxidiert werden.

Es ist die Aufgabe der vorliegenden Erfindung, eine glasklare mehrschichtige Kunststoffolie mit wenigstens einer Polypropylenfolie zu schaffen, die auch nach der Weiterverarbeitung durch Warmverformung zu Verpackungsbehältern das glasklare Aussehen beibehält und die zudem ohne Vorbehandlung bedruckbar ist.

Diese Aufgabe wird gemäss den Merkmalen der kennzeichnenden Teile der Patentansprüche 1, 4, 6, 7 und 8 gelöst.

Die Erfindung wird nachstehend anhand von Zeichnungen beispielsweise näher erläutert. Es zeigen

Fig. 1 einen Schnitt durch eine erfindungsgemässe Kunststoffolie, die mit einer Gassperrschicht versehen ist und

Fig. 2 einen Schnitt durch eine Folie ohne Gassperrschicht.

Kunststoffolien mit mehreren Schichten aus verschiedenen Materialien werden seit längerer Zeit in einem Arbeitsgang auf Koextrusionsanlagen hergestellt. Mehrere auf eine gemeinsame Düse wirkende Extruder sind für die Zuführung der verschiedenen als Granulat in je einem den einzelnen Extrudern zugeordneten Lagerbehälter vorhandenen Materialien besorgt.

Das Koextrusionsverfahren zur Herstellung von mehrschichtigen Kunststoffolien ist bekannt und wird hier nicht weiter beschrieben.

Durch Versuche hat man herausgefunden, dass, wenn auf die Oberfläche einer Polypropylenfolie mit dem eingangs erwähnten Koextrusionsverfahren eine Schicht aus thermoplastischem Polyester aufgebracht wird, die Polypropylenfolie ein glasklares Aussehen erhält. Die Schichtdicke des thermoplastischen Polyesters ist dabei von untergeordneter Bedeutung. Bei der Verwendung der Folie zur Herstellung von Verpackungsbehältern durch Warmverformung für die Lebensmittelindustrie beträgt die Schichtdicke des Polyesters vorzugsweise 1 bis 20% der Dicke der Polypropylenfolie. Die Schichtdicke des Polyesters wird deshalb dünn gewählt, weil man die in der Beschreibungseinleitung genannten günstigen Eigenschaften des Polypropylens für das Verpacken und Aufbewahren von Lebensmitteln als dominierende Komponenten beibehalten will.

Der genaue Mechanismus, warum durch das Aufbringen der Polyesterschicht auf die Oberfläche der Polypropylenfolie letztere glasklar bleibt, ist noch nicht restlos abgeklärt. Es wird angenommen, dass es sich dabei um Reaktionen handelt, die bei der Verschmelzung und der Abkühlung der einzelnen Schichten ausgelöst werden.

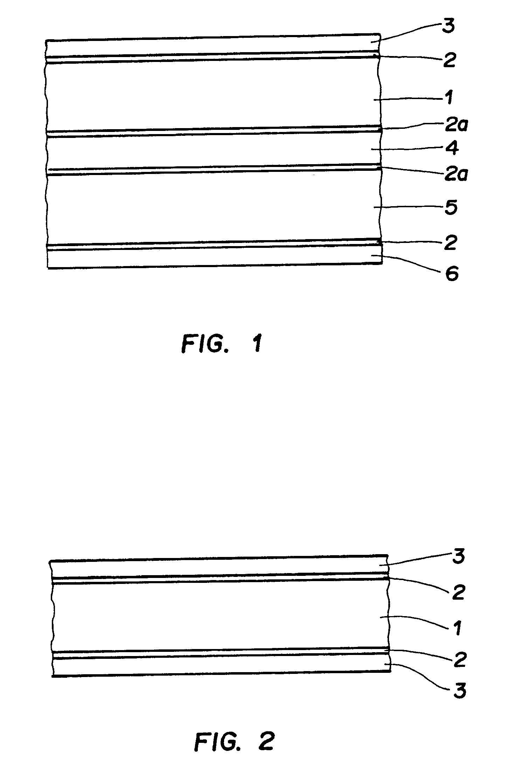

In den Fig. 1 und 2 sind zwei bevorzugte Ausführungsbeispiele der erfindungsgemässen Kunststoffolie im Schnitt dargestellt. Fig. 1 zeigt eine Kunststoffolie, die aus total neun Schichten besteht. Auf der einen Seite der Polypropylenfolie 1 ist eine Schicht aus thermoplastischem Polyester 3 angeordnet und unter Anwendung eines geeigneten, nicht näher bezeichneten Haftvermittlers 2 mit der Polypropylenfolie 1 verbunden. Der Haftvermittler dient nur diesem Zweck und ist als äusserst dünne Schicht mit einer Dicke von 1 bis 10% der Dicke der Polypropylenfolie vorhanden. Auf der der Polyesterschicht 3 abgewandten Seite der Polypropylenfolie 1 ist unter Verwendung eines weiteren Haftvermittlers 2a eine Gassperrschicht 4 mit der Polypropylenfolie 1 fest verbunden. Als Gassperrschicht wird vorzugsweise Polyvinylidenchlorid, ein ungeordnetes Kopolymer von Ethylen und Vinylalkohol oder aromatisiertes Polyamid verwendet. Die Gassperrschicht ist dazu bestimmt, dass zwischen der Innen- und Aussenseite eines aus der Kunststoffolie hergestellten Verpackungsbehälters kein Gasaustausch stattfinden kann. Dadurch bleiben im Behälter gelagerte Lebensmittel lange haltbar. Eine weitere Polypropylenfolie 5 ist unter Verwendung des weiteren Haftvermittlers 2a mit der der Polypropylenfolie 1 abgewandten Seite der Gassperrschicht 4 verbunden. Eine weitere Schicht aus thermoplastischem Polyester 6 ist auf der anderen Seite der weiteren Polypropylenfolie 5 angeordnet. Diese weitere Polyesterschicht 6 ist unter Verwendung eines Haftvermittlers 2 mit der Polypropylenfolie 5 verbunden.

In der Fig. 2 ist eine andere Ausführungsform der erfindungsgemässen Kunststoffolie im Schnitt dargestellt. Im Unterschied zu der soeben beschriebenen Kunststoffolie besteht diese Ausführungsform aus einer Polypropylenfolie 1, bei der auf beiden Seiten je eine Schicht aus thermoplastischem Polyester 3 angeordnet und unter Verwendung je eines Haftvermittlers 2 mit der Polypropylenfolie 1 fest verbunden ist. In dieser Ausführungsform ist keine Gassperrschicht vorhanden.

Thermoplastischer Polyester, wie er auf den Aussenseiten der beschriebenen Polypropylenfolien angeordnet ist, lässt sich ohne Vorbehandlung problemlos mit Aufdrucken versehen. Dadurch kann ein in der Beschreibungseinleitung genannter Nachteil eliminiert werden.

Ein weiteres vorteilhaftes Merkmal der erfindungsgemässen Kunststoffolie besteht darin, dass durch die Sandwich-Bauart für gleiche Steifigkeiten von durch Warmverformung erhaltenen Verpackungsbehältern dünnere Folien verwendet werden können. Obwohl das Polyester im Verhältnis zu Polypropylen relativ teuer ist, wird das Endprodukt durch die Materialeinsparung nicht teurer als wenn reines Polypropylen verwendt würde.

## Ansprüche

1. Mehrschichtige Kunststoffolie mit wenigstens einer Polypropylenfolie (1), dadurch gekennzeichnet, dass auf der einen Seite der Polypropylenfolie (1) eine Schicht aus thermoplastischem Polyester (3) vorhanden ist, dass die Polypropylenfolie (1) und die Polyesterschicht (3) durch einen dazwischen angeordneten Haftvermittler (2) verbunden sind, dass auf der der Polyesterschicht (3) abgewandten Seite der Polypropylenfolie (1) eine Gassperrschicht (4) vorhanden ist, dass die Polypropylenfolie (1) und die Gassperrschicht (4) durch einen dazwischen angeordneten weiteren Haftvermittler (2a) verbunden sind und dass die miteinander verbundenen Folien und Schichten ein Koextrudat bilden.

2. Kunststoffolie nach Anspruch 1, dadurch gekennzeichnet, dass auf der der Polypropylenfolie (1) abgewandten Seite der Gassperrschicht (4) eine weitere Polypropylenfolie (5) und auf der der Gassperrschicht (4) abgewandten Seite der weiteren Polypropylenfolie (5) eine zweite Schicht aus thermoplastischem Polyester (6) vorhanden sind und dass zwischen der Gassperrschicht (4) und der weiteren Polypropylenfolie (5) der weitere Haftvermittler (2a) und zwischen der weiteren Polypropylenfolie (5) und der zweiten Polyesterschicht (6) der Haftvermittler (2) zum Verbinden der verschiedenen Materialien vorhanden sind.

3. Kunststoffolie nach Anspruch 1 oder 2, dadurch gekennzeichnet, dass die Gassperrschicht (4) aus Polyvinylidenchlorid oder aus einem ungeordneten Kopolymer von Ethylen und Vinylalkohol oder aus aromatisiertem Polyamid besteht.

4. Mehrschichtige Kunststoffolie mit wenigstens einer Polypropylenfolie (1), dadurch gekennzeichnet, dass auf beiden Seiten der Polypropylenfolie je eine Schicht aus thermoplastischem Polyester (3) vorhanden ist und dass die Polypropylenfolie (1) und die Polyesterschichten (3) mit je einem sich dazwischen befindlichen Haftvermittler verbunden sind.

5. Kunststoffolie nach einem der Ansprüche 1 bis 4, dadurch gekennzeichnet, dass die Dicke der Polyesterschicht (3, 6) 1-20% der Dicke der Polypropylenfolie (1, 5) beträgt.

6. Verfahren zur Herstellung der mehrschichtigen Kunststoffolie nach einem der Ansprüche 1 bis 3, dadurch gekennzeichnet, dass die Schichten aus thermoplastischem Polyester (3, 6) die Gassperrschicht (4) und die Haftvermittler (2, 2a) auf einer Koextrusionsanlage in einem Arbeitsgang mit den Polypropylenfolien (1, 5) verbunden werden.

7. Verfahren zur Herstellung der mehrschichtigen Kunststoffolie nach Anspruch 4, dadurch gekennzeichnet, dass die Schichten aus thermoplastischem Polyester (3) und die Haftvermittler (2) auf einer Koextrusionsanlage in einem Arbeitsgang mit der Polypropylenfolie (1) verbunden werden.

8. Verwendung der mehrschichtigen Kunststoffolie nach einem der Ansprüche 1 bis 5 zur Herstellung von glasklaren Verpackungsbehältern, insbesondere für die Lebensmittelindustrie.

## Claims

1. Multi-layered plastic film with at least one polypropylene film (1), characterized in that on one side of the polypropylene film (1) there is a layer of thermoplastic polyester (3), in that the polypropylene film (1) and the polyester layer (3) are bonded by an adhesive (2) disposed in-between, in that there is a gas barrier layer (4) on the side of the polypropylene film (1) which is turned away from the polyester layer (3) there is a gas barrier layer (4), in that the polypropylene film (1) and the gas barrier layer (4) are bonded by an additional adhesive (2a) disposed in-between and in that the films and layers bonded together form a coextrudate.

2. A plastic film according to claim 1, characterized in that on the side of the gas barrier layer (4) which is turned away from the polypropylene film (1) there is an additional polypropylene film (5) and on the side of the additional polypropylene film (5) which is turned away from the gas barrier layer (4) there is a second layer of thermoplastic polyester (6) and in that between the gas barrier layer (4) and the additional polypropylene film (5) there is the additional adhesive (2a) and between the additional polypropylene film (5) and the second polyester layer (6) there is the adhesive (2) to bond the various materials.

3. A plastic film according to claim 1 or 2, characterized in that the gas barrier layer (4) is made of polyvinylidene chloride or of a random copolymer of ethylene and vinyl alcohol or of aromatized polyamide.

4. A multilayered plastic film with at least one polypropylene film (1), characterized in that on each of both sides of the polypropylene film there is a layer of thermoplastic polyester (3) and in that the polypropylene film (1) and the polyester layers (3) are each bonded with an adhesive disposed in-between.

5. A plastic film according to one of claims 1 to 4, characterized in that the thickness of the polyester layer (3, 6) is 1-20% of the thickness of the polypropylene film (1, 5).

6. A process for the production of the multilayered plastic film according to one of claims 1 to 3, characterized in that the layers of thermoplastic polyester (3, 6), the gas barrier layer (4) and the adhesives (2, 2a) are bonded with the polypropylene films (1, 5) on coextrusion equipment in one operation.

7. A process for the production of the multilayered plastic film according to claim 4, characterized in that the layers of thermoplastic polyester (3) and the adhesives (2) are bonded with the polypropylene film (1) on coextrusion equipment in one operation.

8. Use of the multilayered plastic film according to one of claims 1 to 5 for the production of glass clear packaging containers, in particular for the foodstuffs industry.

**Revendications**

1. Pellicule multicouche en résine synthétique comprenant au moins une feuille de polypropylène (1), caractérisée en ce que, sur une des faces de la feuille de polypropylène (1), se trouve une couche de polyester thermoplastique (3), en ce que la feuille de polypropylène (1) et la couche de polyester (3) sont liées par un adhésif (2) situé entre elles, en ce que, sur la face de la feuille de polypropylène (1) qui est opposée à celle où se trouve la couche de polyester (3), est disposée une couche de blocage de gaz (4), en ce que la feuille de polypropylène (1) et la couche de blocage de gaz (4) sont liées par un autre adhésif (2a) disposé entre elles, et en ce que les feuilles et couches liées entre elles forment un coextrudat.

2. Pellicule selon la revendication 1, caractérisée en ce que, sur la face de la couche de blocage de gaz (4) opposée à la feuille de polypropylène (1), se trouve une autre feuille de polypropylène (5), tandis que, sur la face de cette autre feuille de polypropylène (5) qui est opposée à la couche de blocage de gaz (4), se trouve une deuxième couche de polyester thermoplastique (6), et en ce que, entre la couche de blocage de gaz (4) et ladite autre feuille de polypropylène (5) se trouve, pour les lier, ledit autre adhésif (2a), tandis que, entre la deuxième couche de polyester (6) et ladite autre feuille de polypropylène (5) se trouve ledit premier adhésif (2), ceci de façon à lier les différents matériaux en présence.

3. Pellicule selon la revendication 1 ou la revendication 2, caractérisée en ce que la couche de blocage de gaz (4) consiste en un chlorure de polyvinyle, ou en un copolymère non ordonné d'éthylène et d'alcool vinylique, ou encore en un polyamide aromatique.

4. Pellicule multicouche en résine synthétique comprenant au moins une feuille de polypropylène (1), caractérisée en ce que, sur chacune des deux faces de la feuille de polypropylène, se trouve une couche de polyester thermostatique (3), et en ce que la feuille de polypropylène (1) et les couches de polyester (3) sont chaque fois liées par un adhésif se trouvant entre elles.

5. Pellicule selon l'une des revendications 1 à 4, caractérisée en ce que l'épaisseur de la couche de polyester (3, 6) se monte à 1-20% de l'épaisseur de la feuille de polypropylène (1, 5).

6. Procédé de fabrication d'une pellicule multicouche en résine synthétique selon l'une des revendications 1 à 3, caractérisé en ce que les couches de polyester thermostatique (3, 6), la couche de blocage de gaz (4) et les agents adhésifs (2, 2a) sont liés aux feuilles de polypropylène (1, 5) en une seule phase de travail dans une installation de coextrusion.

7. Procédé de fabrication d'une pellicule multicouche en résine synthétique selon la revendication 4, caractérisé en ce que les couches de polyester thermostatique (3) et l'agent adhésif (2) sont liés à la feuille de polypropylène (1) en une seule phase de travail dans une installation de coextrusion.

8. Utilisation de la pellicule multicouche en résine synthétique selon l'une des revendications 1 à 5, pour la fabrication de récipients d'emballages transparents, en particulier pour l'industrie des produits alimentaires.

FIG. 1

FIG. 2